(19) Europäisches Patentamt / European Patent Office / Office européen des brevets

(11) **EP 3 591 607 A1**

(12) **EUROPEAN PATENT APPLICATION**

(43) Date of publication:
08.01.2020   Bulletin 2020/02

(51) Int Cl.:
*G06T 3/40* (2006.01)

(21) Application number: 18204776.1

(22) Date of filing: 07.11.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 04.07.2018   CN 201810726198

(71) Applicant: **Sysmax Innovations Co., Ltd.**
**510623 Guangzhou, Guangdong (CN)**

(72) Inventor: **LI, Wenjie**
**Guangzhou, Guangdong 510623 (CN)**

(74) Representative: **Zaboliene, Reda**
**METIDA Law Firm Zaboliene and Partners**
**Business center VERTAS**
**Gyneju 16**
**01109 Vilnius (LT)**

(54) **IMAGE STITCHING METHOD AND SYSTEM BASED ON CAMERA EARPHONE**

(57)   Provided is an image stitching method based on a camera earphone, comprising: acquiring images photographed by at least two camera earphones at different angles; removing areas that are blocked by human face of the images photographed by the two camera earphones to obtain two effective images to be stitched; extracting feature points of the two effective images to be stitched, and registering the feature points of the two effective images to be stitched; unifying coordinate systems of the two effective images to be stitched according to registered feature points to obtain an initial stitched panoramic image; finding a stitching seam in the initial stitched panoramic image and generating a mask image; and fusing the mask image and the initial stitched panoramic image to obtain a stitched panoramic image.

Fig. 2

**Description**

CROSS REFERENCE TO RELATED APPLICATION

This application claims priority to Chinese Application No. 201810726198.X having a filing date of July 4, 2018, the entire contents of which are hereby incorporated by reference.

FIELD OF TECHNOLOGY

The following relates to the field of image processing, in particularly to a method and system for stitching images photographed by a camera earphone.

BACKGROUND

With the development of information technology, VR (Virtual Reality) technology, as a computer simulation system that can be used to create and experience virtual worlds, has spread rapidly in various fields including videos, games, pictures, and shopping. Panoramic images and panoramic videos are important parts of VR contents, and they are stitched by generation tools corresponding thereto such as panoramic cameras to obtain pictures with large fields of view, so that viewers have more realistic experience for the various view angles at which the pictures or videos are photographed. However, the panoramic camera products currently available on the market are relatively large in size and not convenient to carry, or require deliberately holding a device for taking panoramic photos, which is not convenient.

Portable or small-size glasses or Bluetooth earphones with a photographic function for example have only one camera. As the field of view of the one camera is sure not large, it cannot provide content at a sufficient angle for the viewer to get realistic experience. Moreover, few people are willing to wear an electronic product with one camera to perform photographing in their daily life, and people around will feel strange.

Earphones are indispensable electronic consumer goods for most young people nowadays. First of all, wearing them is not obtrusive to the surrounding people. In the case of a camera earphone, base on the original earphone which can be worn to listen to music, left and right earpieces thereof are each provided with a camera therein for photography; in this way, it can become the best device to capture the wearer's environment at present with a first view angle as long as the fields of view of the left and right cameras are large enough; and it can help the wearer to record some wonderful moments of his everyday life.

However, there is still no stitching method based on this type of camera earphone, and there is corresponding difficulty in dealing with the challenge. As the ears are located at the middle-rear part of the human head when the camera earphone is worn for photography, it is inevitable that the head blocks part of the light from entering the lens. Stitching such photos with blocked areas in imaging is liable to result in stitching failure or very poor stitching effect.

SUMMARY

Based on this, an objective of the present invention is to provide an image stitching method based on a camera earphone, which has the advantages of capable of removing blocked areas in left and right images photographed by left and right camera earphones, stitching the images into a seamless panoramic image, and achieving the panoramic image vision exceeding the range of angles viewed by the human eye and high stitching efficiency.

An image stitching method based on a camera earphone, including the following steps:

acquiring images photographed by at least two camera earphones at different angles;
removing areas that are blocked by human face of the images photographed by the two camera earphones to obtain two effective images to be stitched;
extracting feature points in the two effective images to be stitched, and registering the feature points of the two effective images to be stitched;
unifying coordinate systems of the two effective images to be stitched according to registered feature points to obtain an initial stitched panoramic image;
finding a stitching seam in the initial stitched panoramic image and generating a mask image; and
fusing the mask image and the initial stitched panoramic image to obtain a stitched panoramic image.

Compared with the known art, in the present invention, as the blocked areas in the images photographed by the two camera earphones are removed, and then the images are stitched to form the panoramic image, the stitched panoramic image is complete and good in effect, and can achieve the panoramic image vision exceeding the range of angles viewed by the human eyes.

Further, the two camera earphones at different angles comprise a left camera earphone on a side of a left ear of a wearer and a right camera earphone on a side of a right ear of the wearer; and the images photographed by the two camera earphones at different angles comprise a left image photographed by the left camera earphone and a right image photographed by the right camera earphone.

Further, the step of removing areas that are blocked by human face of the images photographed by the two camera earphones to obtain two effective images to be stitched comprises:

graying the left image and the right image respectively to obtain a grayed left image and a grayed right image;

acquiring gradient values of the grayed left image and grayed right image at each pixel on each row respectively;

sequentially calculating from right to left a sum of gradient values of the grayed left image on each column, and determining whether the sum of gradient values of each column is greater than a preset threshold; if it is greater than the preset threshold, using the column as a new left border,

and selecting an image from the new left border to a right border of the left image as an effective left image to be stitched; and if it is not greater than the preset threshold, moving left by one column, and continuing to calculate the sum of gradient values of next column; and

sequentially calculating from left to right a sum of gradient values of the grayed right image on each column, and determining whether the sum of gradient values of each column is greater than a preset threshold; if it is greater than the preset threshold, using the column as a new right border, and selecting an image from the new right border to a left border of the right image as an effective right image to be stitched; and if it is not greater than the preset threshold, moving right by one column, and continuing to calculate the sum of gradient values of next column.

Further, after the areas that are blocked by human face of the images photographed by the two camera earphones are removed, overlapped areas in the left image and the right image are acquired respectively, the overlapped areas in the left image and the right image serving as the two effective images to be stitched, so as to improve stitching efficiency.

Further, using SURF algorithm, ORB algorithm or SIFT algorithm, feature points in the effective left image to be stitched and the effective right image to be stitched are extracted respectively, and the feature points in the effective left image to be stitched and the effective right image to be stitched are registered.

Further, after the feature points in the effective left image to be stitched and the effective right image to be stitched are registered, mismatched feature points in the effective left image to be stitched and the effective right image to be stitched are removed by using RANSAC algorithm to improve registration accuracy.

Further, the step of unifying coordinate systems of the two effective images to be stitched according to the registered feature points to obtain an initial stitched panoramic image comprises:

unifying the coordinate systems of the two effective images to be stitched by solving a perspective projection matrix and projecting the effective left image to be stitched through perspective projection to the effective right image to be stitched; or

unifying the coordinate systems of the two effective images to be stitched by solving the perspective projection matrix and projecting the effective right image to be stitched through perspective projection to the effective left image to be stitched.

Further, the stitching seam is searched for in the initial stitched panoramic image by maximum flow algorithm, and then the mask image is generated.

Further, the mask image and the initial stitched panoramic image are fused by a fade-in and fade-out fusion method or a multi-band fusion method.

Further, after the images photographed by the two camera earphones at different angles are acquired, positioning information transmitted by positioning devices in the two camera earphones is acquired, relative positions of the two camera earphones are calculated according to the positioning information, and a database is searched according to the relative positions of the two camera earphones to determine whether stitching template data corresponding thereto is present, and if so, the images photographed by the two camera earphones are stitched into an initial stitched panoramic image through stitching template data stored in the database, a mask image in the stitching template data is acquired, and the mask image and the initial stitched panoramic image are fused to obtain a stitched panoramic image; and if there is no corresponding stitching template data, the areas that are blocked by human face of the images photographed by the two camera earphones are removed. Based on the relative positions of the two camera earphones, when they are identical to the relative positions of the two camera earphones stored in the database, it does not need to re-determine stitching parameters, and the parameters required for stitching are directly retrieved for stitching, so that the stitching efficiency is improved.

Further, method of searching a database according to the relative positions of the two camera earphones to determine whether stitching template data corresponding thereto is present is as follow: comparing the relative positions of the two camera earphones with stitching template data stored in the database to determine whether a piece of data indicates identical information to the relative positions of the two camera earphones, wherein if so, there is corresponding stitching template data; otherwise, there is no corresponding stitching template data.

Further, the stitching template data includes the relative positions of the two camera earphones and stitching parameters required for image stitching at the relative positions, the stitching parameters including removing positions for removing the areas that are blocked by human face of the images photographed by the two camera earphones, the perspective projection matrix for unifying the coordinate systems of the two effective images to be stitched, and the mask image.

Further, after the mask image is generated, the relative positions of the two camera earphones, the removing positions for removing the areas that are blocked by human face of the images photographed by the two camera earphones, the perspective projection matrix for unifying the coordinate systems of the two effective images to be stitched, and the mask image are bound as the stitching template data and saved to the database, and then the stitching template data is directly retrieved for seam stitching when relative positions of the two camera earphones are identical to the relative positions of the two camera earphones stored in the database, thus improving stitching efficiency.

The present invention also provides an image stitching system based on a camera earphone, including a memory, a processor and a computer program stored in the memory and executable by the processor, and the steps of the image stitching method based on the camera earphone described above are implemented when the processor executes the computer program.

The present invention also provides a computer readable storage medium storing a computer program that, when executed by a processor, implements the steps of the image stitching method based on the camera earphone described above.

BRIEF DESCRIPTION OF THE DRAWINGS

Some of the embodiments will be described in detail, with references to the following figures, wherein like designations denote like members, wherein:

　　　Fig. 1 is a structural diagram of arrangement positions of a camera earphone;
　　　Fig. 2 shows photographic areas of the camera earphone in an embodiment of the present invention;
　　　Fig. 3 is a flow diagram of an image stitching method based on a camera earphone in an embodiment of the present invention;
　　　Fig. 4 is a position coordinate diagram of a human body wearing the camera earphone in an embodiment of the present invention;
　　　Fig. 5 is a flow diagram of removing areas that are blocked by human face of images photographed by two camera earphones in an embodiment of the present invention;
　　　Fig. 6 is a schematic diagram of overlapped areas photographed by a left camera earphone and a right camera earphone; and
　　　Fig. 7 is a schematic diagram of a left image and a right image.

DETAILED DESCRIPTION

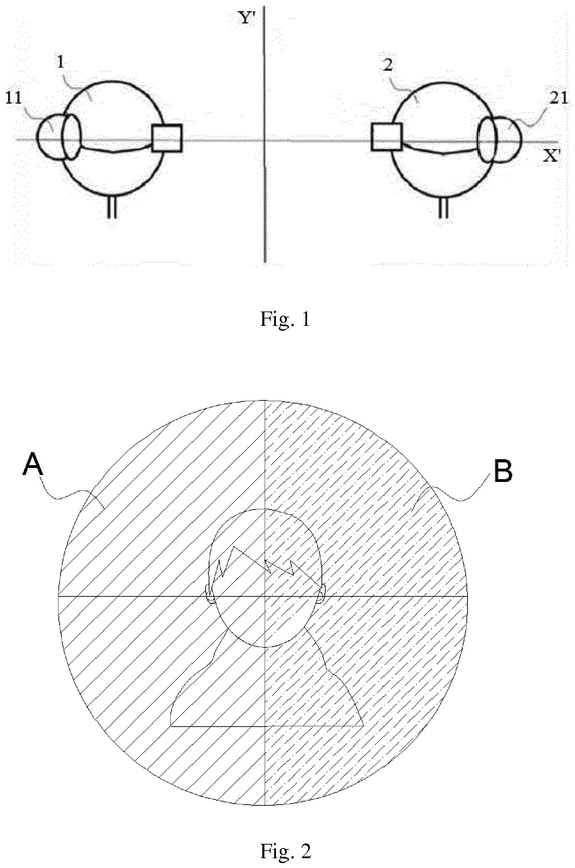

Referring to both Fig. 1 and Fig. 2, Fig. 1 is a structural diagram of arrangement positions of a camera earphone; and Fig. 2 shows photographic areas of the camera earphone of the present invention. The present invention provides an image stitching method based on a camera earphone. The corresponding camera earphone is configured as follows: the camera earphone includes a left earpiece main body 1 and a right earpiece main body 2; a left camera 11 is disposed on a side of the left earpiece main body 1 facing away from the left ear of a wearer, and a right camera 21 is disposed on a side of the right earpiece main body 2 facing away from the right ear of the wearer; the left camera 11 and the right camera 21 are ultra wide-angle cameras with a field of view of at least 180 degrees; and the optical axis directions of the left camera 11 and the right camera 21 are perpendicular to the optical axis of the wearer's eyes. Furthermore, the ultra wide-angle camera lenses of the left camera 11 and the right camera 21 are fish-eye camera lenses, which use fish-eye lenses as lenses thereof. If the direction in which the human eyes are looking straight ahead is defined as an optical axis Y', and a connecting line of the left camera and the right camera is an axis X', then the connecting line of the left camera 11 and the right camera 21 is perpendicular to the optical axis of the human eyes, that is, the mounting direction of the left camera 11 and the right camera 21 is perpendicular to the user's eyes, i.e. the optical axis of the left camera 11 and the optical axis of the right camera 21 are perpendicular (including substantially perpendicular) to the optical axis of the human eyes. Preferably, the connecting line of the left camera 11 and the right camera 21 is in parallel or coincides with the connecting line of the user's left ear hole and right ear hole. Static or moving images within the field of view of at least 180 degrees in the region A on the left side of the wearer can be photographed by the left fish-eye lens, and static or moving images within the field of view of at least 180 degrees in the region B on the right side of the wearer can be photographed by the right fish-eye lens. After the image data photographed by the left camera and the right camera are stitched, a 360-degree panoramic image can be obtained.

A left gyroscope chip and a right gyroscope chip are respectively embedded in the left earpiece main body and the right earpiece main body. With respect to the configuration of the camera earphone described above, the object of the present invention is to stitch the images photographed by the left camera and the right camera described above to obtain a panoramic image that exceeds the range of angles viewed by the human eyes. The stitching method provided by the present invention will be described in detail below.

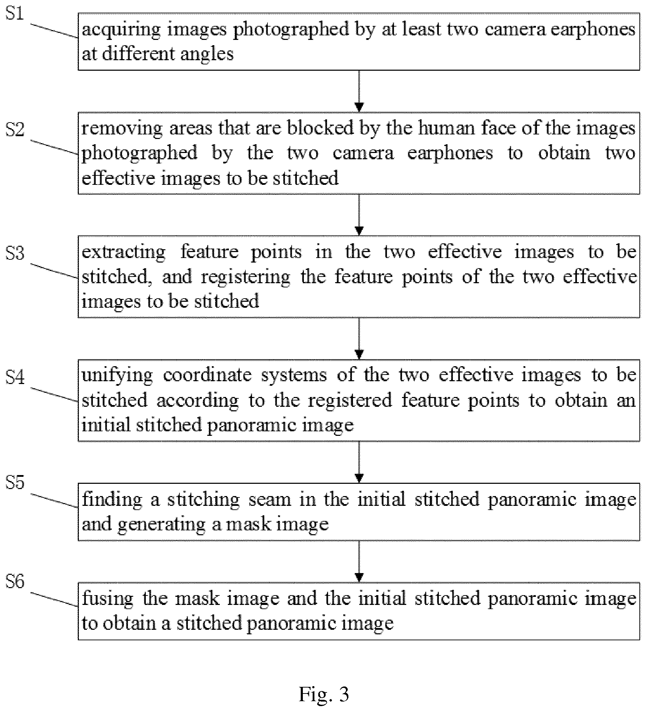

Please refer to Fig. 3, which is a flow diagram of an image stitching method based on a camera earphone in an embodiment of the present invention. The image stitching method based on the camera earphone includes the following steps:

Step S1: acquiring images photographed by at least two camera earphones at different angles.

The two camera earphones at different angles are a left camera earphone on a side of the left ear of a wearer and a right camera earphone on a side of the right ear of the wearer; and the images photographed by the two camera earphones at different angles are a left image photographed by the left camera earphone and a right image photographed by the right camera earphone.

In one embodiment, to conveniently and quickly stitch the images captured by the two camera earphones having identical relative positions, after the images photographed by the two camera earphones at different angles are acquired, positioning information transmitted by positioning devices in the two camera earphones is acquired, the relative positions of the two camera earphones are calculated according to the positioning information, and a database is searched according to the relative positions of the two camera earphones to determine whether stitching template data corresponding thereto is present, and if so, the images photographed by the camera earphones are stitched into an initial stitched panoramic image through the stitching template data stored in the database, a mask image in the stitching template data is acquired, and the mask image and the initial stitched panoramic image are fused to obtain a stitched panoramic image; and if there is no corresponding stitching template data, the areas that are blocked by the human face of the images photographed by the two camera earphones are removed. The method of searching a database according to the relative positions of the two camera earphones to determine whether stitching template data corresponding thereto is present is: comparing the relative positions of the two camera earphones with stitching template data stored in the database to determine whether a piece of data indicates identical information to the relative positions of the two cameras, wherein if so, there is corresponding stitching template data; otherwise, there is no corresponding stitching template data. The stitching template data includes the relative positions of the two camera earphones and stitching parameters required for image stitching at the relative positions, the stitching parameters including removing positions for removing the areas that are blocked by the human face of the images photographed by the two camera earphones, a perspective projection matrix for unifying the coordinate systems of the two effective images to be stitched, and a mask image.

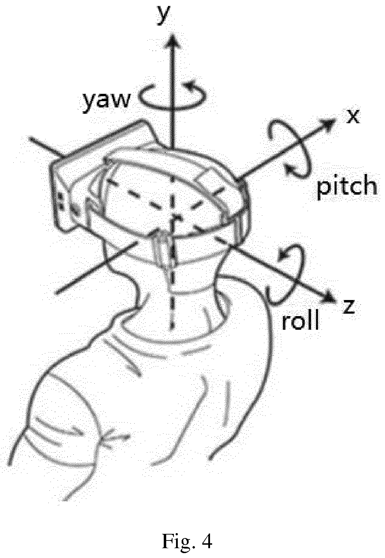

The positioning devices in the two camera earphones are a left gyroscope on the left camera earphone and a right gyroscope on the right camera earphone. The positioning information is the attitude angle of the left gyroscope and the attitude angle of the right gyroscope. Please refer to Fig. 4, which is a position coordinate diagram of a human body wearing the camera earphone of the present invention. In one embodiment, the information of the left gyroscope and the right gyroscope is the attitude angle $G_L$ of the left gyroscope and the attitude angle $G_R$ of the right gyroscope at present, which are three-dimensional vectors, the $G_L$ being ($L_{pitch}$, $L_{yaw}$, $L_{roll}$), and the $G_R$ being ($R_{pitch}$, $R_{yaw}$, $R_{roll}$), wherein a connecting line of the center of the left camera and the center of the right camera is defined as an X-axis direction, and the vertical direction is a Y-axis direction, and a direction perpendicular to the plane of the X-axis and the Y-axis is an Z-axis direction; and the pitch, yaw, and roll represent rotation angles in the three directions of the X-axis, the Y-axis, and the Z-axis, respectively. The relative positions of the two camera earphones are calculated by subtracting the positioning information $G_L$ of the left gyroscope from the information $G_R$ of the right gyroscope to obtain the relative positions D of the left camera and the right camera that currently photograph the left and right images, specifically ($L_{pitch}$-$R_{pitch}$, $L_{yaw}$-$R_{yaw}$, $L_{roll}$-$R_{roll}$).

Step S2: removing areas that are blocked by the human face of the images photographed by the two camera earphones to obtain two effective images to be stitched.

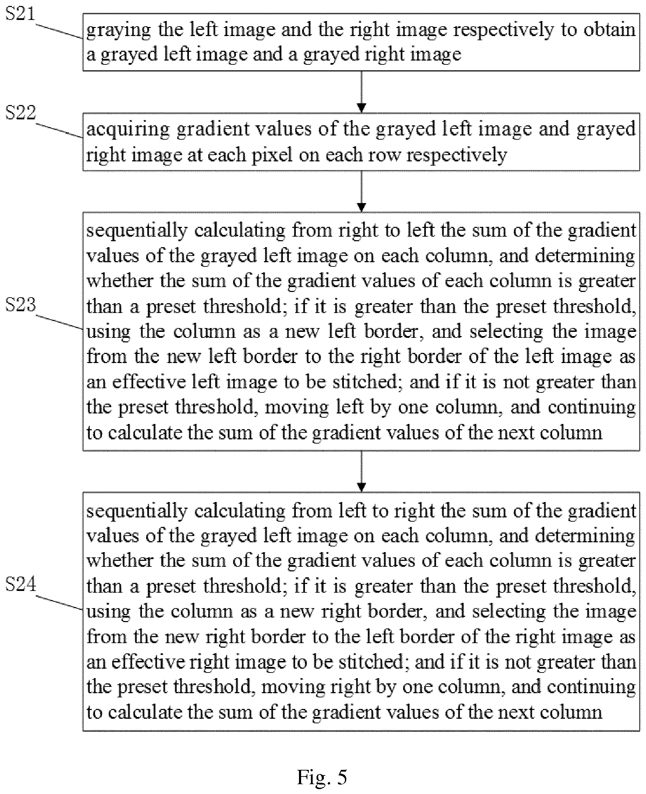

Please refer to Fig. 5, which is a flow diagram of removing the areas that are blocked by the human face of the images photographed by the two camera earphones in the present invention. In one embodiment, removing the areas that are blocked by the human face of the images photographed by the two camera earphones includes the following steps:

Step S21: graying the left image and the right image respectively to obtain a grayed left image and a grayed right image;
Step S22: acquiring gradient values of the grayed left image and grayed right image at each pixel on each row respectively;
Step S23: sequentially calculating from right to left the sum of the gradient values of the grayed left image on each column, and determining whether the sum of the gradient values of each column is greater than a preset threshold; if it is greater than the preset threshold, using the column as a new left border, and selecting the image from the new left border to the right border of the left image as an effective left image to be stitched; and if it is not greater than the preset threshold, moving left by one column, and continuing to calculate the sum of the gradient values of the next column; and
Step S24: sequentially calculating from left to right the sum of the gradient values of the grayed right image on each column, and determining whether the sum of the gradient values of each column is greater than a preset threshold; if it is greater than the preset threshold, using the column as a new right border, and selecting the image from the new right border to the left border of the right image as an effective right image to be stitched; and if it is not greater than the preset threshold, moving right by one column, and continuing to calculate the sum of the gradient valuesof the next column.

The position from right to left is so defined that when facing the left image, the side corresponding to the left ear is the left side, and the side corresponding to the right ear is the right side. The position from left to right is so defined that when facing the right image, the side corresponding to the left ear is the left side, and the side corresponding to the right ear is the right side.

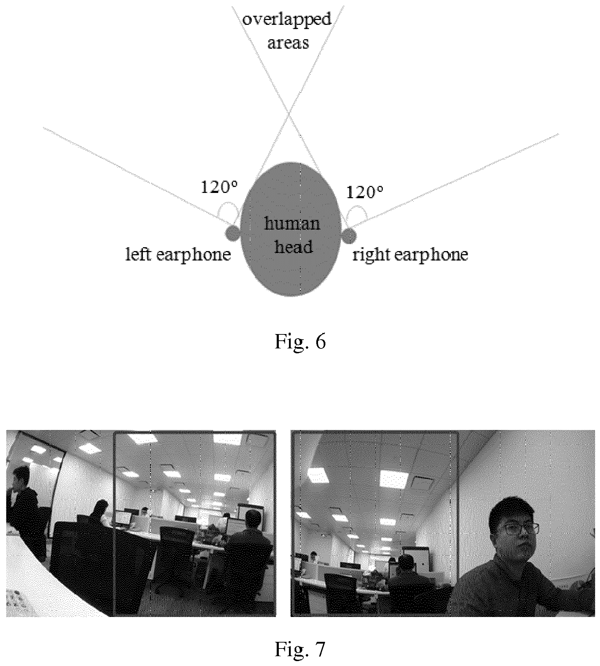

In one embodiment, to improve the stitching efficiency, after the areas blocked by the human face in the images photographed by the two camera earphones are removed, overlapped areas in the left image and the right image are acquired respectively, the overlapped areas in the left image and the right image serving as the two effective images to be stitched. Acquiring the effective overlapped areas is: acquiring the same according to the relative positions of the left gyroscope of the left camera earphone and the right gyroscope of the right camera earphone and the fields of view of the cameras of the left camera earphone and the right camera earphone, through calibrated empirical values of starting positions of the fields of view and overlapped starting positions of the images. Specifically, referring to both Figs. 6 and 7, Fig. 6 is a schematic diagram of the overlapped areas photographed by the left camera earphone and the right camera earphone; and Fig. 7 is a schematic diagram of the left image and the right image. In the case where the relative positions and the fields of view of 120° of the left camera earphone and the right camera earphone are determined, the overlapped areas of the left image and the right image can be obtained at this relative angle by the pre-calibrated empirical values. Then correspondingly in the left and right images, they are the areas marked by the rectangular box in Fig. 6.

Step S3: extracting feature points in the two effective images to be stitched, and registering the feature points of the two effective images to be stitched.

In one embodiment, using the SURF (Speeded Up Robust Features) algorithm, the ORB (Oriented FAST and Rotated BRIEF) algorithm or the SIFT (Scale-invariant feature transform) algorithm, the feature points in the effective left image to be stitched and the effective right image to be stitched can be extracted respectively, and the feature points in the effective left image to be stitched and the effective right image to be stitched can be registered.

To further reduce the mismatch and improve the matching accuracy, in one embodiment, the RANSAC (Random Sample Consensus) algorithm is used to remove mismatched feature points in the effective left image to be stitched and the effective right image to be stitched.

Step S4: unifying coordinate systems of the two effective images to be stitched according to the registered feature points to obtain an initial stitched panoramic image.

In one embodiment, the perspective projection matrix is solved and the left image to be stitched is projected into the right image to be stitched through perspective projection to unify the coordinate systems of the two effective images to be stitched, specifically including the following steps:

The paired left and right images can be represented by n sets of feature point coordinate pairs, specifically $(L_1(x_1,y_1),R_1(x_1',y_1'))$, $(L_2(x_2,y_2),R_2(x_2',y_2'))$,......,$(L_n(x_n,y_n),R_n(x_n',y_n'))$, wherein $(L_i,R_i)$ is a set of matching pair; $L_i$ and $R_i$ are each a two-dimensional coordinate; and x, y in $L_i$ represents the coordinate position of the feature point in the left image, and x, y in $R_i$ represents the coordinate position of the feature point in the right image. By solving a homogeneous linear equation, it is possible to calculate a perspective projection matrix M such that R=M*L, where

$$M = \begin{bmatrix} m_{11} & m_{12} & m_{13} \\ m_{21} & m_{22} & m_{23} \\ m_{31} & m_{32} & 0 \end{bmatrix},$$ wherein the eight parameters of the perspective projection matrix M represent the amounts of rotation, size, and translation, that is, multiplying the perspective projection matrix M by the coordinate (x, y) of the feature point of the left image can get the coordinate (x', y') of the feature point on the right image. As there are 8 unknowns in the perspective projection matrix M, generally 8 sets of feature pairs can get a specific set of solutions, but in general, the number of feature point pairs will exceed this value, then the finally calculated parameters of M are such that $\sum_{i=1}^{n}\|R_i - M \cdot L_i\|$ is the smallest, where $R_i - M g L_i$ is an vector obtained by reducing a vector coordinate obtained by multiplying M by $L_i$ from the original $R_i$, and then modulate the difference vector to get the length of the vector, that is, the final M is such that after all the feature points of the left image are transformed, the difference between the converted feature points and all corresponding feature points of the right image reaches the minimum value, that is, the following formula reaches the minimum:

$$\sum_{i=1}^{n} \left\| \begin{bmatrix} x_i' \\ y_i' \\ 1 \end{bmatrix} - \begin{bmatrix} m_{11} & m_{12} & m_{13} \\ m_{21} & m_{22} & m_{23} \\ m_{31} & m_{32} & 0 \end{bmatrix} \cdot \begin{bmatrix} x_i \\ y_i \\ 1 \end{bmatrix} \right\|$$

Therefore, the perspective projection matrix M is multiplied by each point in the left image to obtain the position of each point in the left image in the final panoramic image with the right image as the standard, that is, the coordinate systems of the left and right images are unified, thus obtaining the panoramic image with a seam.

In another embodiment, the coordinate systems of the two effective images to be stitched can also be unified by solving the perspective projection matrix and projecting the right image to be stitched through perspective projection to the left image to be stitched.

Step S5: finding a stitching seam in the initial stitched panoramic image and generating a mask image.

To obtain a relatively complete image and prevent the stitching effect from being affected by the relatively large parallax, in one embodiment, the stitching seam is searched for in the initial stitched panoramic image by the maximum flow algorithm, and then the mask image is generated.

To conveniently and quickly stitch the left and right images photographed by left and right camera earphones having identical relative positions with that stored in the database, in one embodiment, the relative positions of the two camera earphones in step S1, the removing positions for removing the areas blocked by the human face in the images photographed by the two camera earphones in step S2, the perspective projection matrix for unifying the coordinate systems of the two effective images to be stitched in step S4, and the mask image in step S5 are bound as the stitching template data and saved to the database, and then the stitching template data is directly retrieved for seam stitching when the same relative positions of the left and right camera earphones are encountered.

Step S6: fusing the mask image and the initial stitched panoramic image to obtain a stitched panoramic image.

In one embodiment, the mask image and the initial stitched panoramic image are fused by a fade-in and fade-out fusion method or a multi-band fusion method.

The present invention also provides an image stitching system based on a camera earphone, including a memory, a processor and a computer program stored in the memory and executable by the processor, and the steps of the image stitching method based on the camera earphone described above are implemented when the processor executes the computer program.

The present invention also provides a computer readable storage medium storing a computer program that, when executed by a processor, implements the steps of the image stitching method based on the camera earphone described above.

Compared with the known art, in the present invention, as the blocked areas in the images photographed by the two camera earphones are removed, and then the images are stitched to form the panoramic image, the stitched panoramic image is complete and good in effect, and can achieve the panoramic image vision exceeding the range of angles viewed by the human eyes.

Further, based on the relative positions of the left and right camera earphones, when they are identical to the relative positions of the left and right camera earphones stored in the database, it does not need to re-determine the stitching parameters, and the parameters required for stitching are directly retrieved for stitching, so that the stitching efficiency is greatly improved.

Although the invention has been illustrated and described in greater detail with reference to the preferred exemplary embodiment, the invention is not limited to the examples disclosed, and further variations can be inferred by a person skilled in the art, without departing from the scope of protection of the invention.

For the sake of clarity, it is to be understood that the use of "a" or "an" throughout this application does not exclude a plurality, and "comprising" does not exclude other steps or elements.

**Claims**

1. An image stitching method based on a camera earphone, comprising the following steps:

   acquiring images photographed by at least two camera earphones at different angles;
   removing areas that are blocked by human face of the images photographed by the two camera earphones to obtain two effective images to be stitched;
   extracting feature points of the two effective images to be stitched, and registering the feature points of the two effective images to be stitched;
   unifying coordinate systems of the two effective images to be stitched according to registered feature points to obtain an initial stitched panoramic image;
   finding a stitching seam in the initial stitched panoramic image and generating a mask image; and
   fusing the mask image and the initial stitched panoramic image to obtain a stitched panoramic image.

2. The image stitching method based on a camera earphone according to claim 1, wherein the two camera earphones at different angles comprise a left camera earphone on a side of a left ear of a wearer and a right camera earphone on a side of a right ear of the wearer; and the images photographed by the two camera earphones at different angles comprise a left image photographed by the left camera earphone and a right image photographed by the right camera earphone.

3. The image stitching method based on a camera earphone according to claim 2, wherein the step of removing areas that are blocked by human face of the images photographed by the two camera earphones to obtain two effective images to be stitched comprises:

   graying the left image and the right image respectively to obtain a grayed left image and a grayed right image;
   acquiring gradient values of the grayed left image and grayed right image at each pixel on each row respectively;
   sequentially calculating from right to left a sum of gradient values of the grayed left image on each column, and determining whether the sum of gradient values of each column is greater than a preset threshold; if it is greater than the preset threshold, using the column as a new left border, and selecting an image from the new left border to a right border of the left image as an effective left image to be stitched; and if it is not greater than the preset threshold, moving left by one column, and continuing to calculate the sum of gradient values of next column; and

sequentially calculating from left to right a sum of gradient values of the grayed right image on each column, and determining whether the sum of gradient values of each column is greater than a preset threshold; if it is greater than the preset threshold, using the column as a new right border, and selecting an image from the new right border to a left border of the right image as an effective right image to be stitched; and if it is not greater than the preset threshold, moving right by one column, and continuing to calculate the sum of gradient values of next column.

4. The image stitching method based on a camera earphone according to claim 3, wherein after the areas that are blocked by human face of the images photographed by the two camera earphones are removed, overlapped areas in the left image and the right image are acquired respectively, the overlapped areas in the left image and the right image serving as the two effective images to be stitched.

5. The image stitching method based on a camera earphone according to claim 2, wherein using SURF algorithm, ORB algorithm or SIFT algorithm, feature points in the effective left image to be stitched and the effective right image to be stitched are extracted respectively, and the feature points in the effective left image to be stitched and the effective right image to be stitched are registered;

and/or after the feature points in the effective left image to be stitched and the effective right image to be stitched are registered, mismatched feature points in the effective left image to be stitched and the effective right image to be stitched are removed by using RANSAC algorithm;

the step of unifying coordinate systems of the two effective images to be stitched according to registered feature points to obtain an initial stitched panoramic image comprises:

unifying the coordinate systems of the two effective images to be stitched by solving a perspective projection matrix and projecting the effective left image to be stitched through perspective projection to the effective right image to be stitched; or
unifying the coordinate systems of the two effective images to be stitched by solving the perspective projection matrix and projecting the effective right image to be stitched through perspective projection to the effective left image to be stitched;

the stitching seam is searched for in the initial stitched panoramic image by maximum flow algorithm, and then the mask image is generated; and/or

the mask image and the initial stitched panoramic image are fused by a fade-in and fade-out fusion method or a multi-band fusion method.

6. The image stitching method based on a camera earphone according to claim 1, wherein after the images photographed by the two camera earphones at different angles are acquired, positioning information transmitted by positioning devices in the two camera earphones is acquired, relative positions of the two camera earphones are calculated according to the positioning information, and a database is searched according to the relative positions of the two camera earphones to determine whether stitching template data corresponding thereto is present, and if so, the images photographed by the two camera earphones are stitched into an initial stitched panoramic image through stitching template data stored in the database, a mask image in the stitching template data is acquired, and the mask image and the initial stitched panoramic image are fused to obtain a stitched panoramic image; and if there is no corresponding stitching template data, the areas that are blocked by human face of the images photographed by the two camera earphones are removed.

7. The image stitching method based on a camera earphone according to claim 6, wherein the positioning devices in the two camera earphones comprise a left gyroscope on the left camera earphone and a right gyroscope on the right camera earphone; and the positioning information comprises an attitude angle of the left gyroscope and an attitude angle of the right gyroscope; and the relative positions of the two camera earphones are calculated by subtracting the attitude angle of the left gyroscope from the attitude angle of the right gyroscope;

method of searching a database according to the relative positions of the two camera earphones to determine whether stitching template data corresponding thereto is present is as follow: comparing the relative positions of the two camera earphones with stitching template data stored in the database to determine whether a piece of data indicates identical information to the relative positions of the two camera earphones, wherein if so, there is corresponding stitching template data; otherwise, there is no corresponding stitching template data;

the stitching template data includes the relative positions of the two camera earphones and stitching parameters required for image stitching at the relative positions, the stitching parameters including removing positions for removing the areas that are blocked by human face of the images photographed by the two camera earphones, the perspective projection matrix for unifying the coordinate systems of the two effective images to be stitched, and the mask image;

after the mask image is generated, the relative positions of the two camera earphones, the removing positions for removing the areas that are blocked by human face of the images photographed by the two camera earphones, the perspective projection matrix for unifying the coordinate systems of the two effective images to be stitched, and the mask image are bound as the stitching template data and stored in the database, and then the stitching template data is directly retrieved for seam stitching when relative positions of the two camera earphones are identical to the relative positions of the two camera earphones stored in the database.

8. An image stitching system based on a camera earphone, comprising a memory, a processor and a computer program stored in the memory and executable by the processor; when the processor executes the computer program, the following steps are implemented:

acquiring images photographed by at least two camera earphones at different angles;

removing areas that are blocked by human face of the images photographed by the two camera earphones to obtain two effective images to be stitched;

extracting feature points of the two effective images to be stitched, and registering the feature points of the two effective images to be stitched;

unifying coordinate systems of the two effective images to be stitched according to registered feature points to obtain an initial stitched panoramic image;

finding a stitching seam in the initial stitched panoramic image and generating a mask image; and

fusing the mask image and the initial stitched panoramic image to obtain a stitched panoramic image.

9. The image stitching system based on a camera earphone according to claim 8, wherein the two camera earphones at different angles comprise a left camera earphone on a side of a left ear of a wearer and a right camera earphone on a side of a right ear of the wearer; and the images photographed by the two camera earphones at different angles comprise a left image photographed by the left camera earphone and a right image photographed by the right camera earphone;

in the steps implemented when the processor executes the computer program, the step of removing areas that are blocked by human face of the images photographed by the two camera earphones to obtain two effective images to be stitched comprises:

graying the left image and the right image respectively to obtain a grayed left image and a grayed right image;

acquiring gradient values of the grayed left image and grayed right image at each pixel on each row respectively;

sequentially calculating from right to left a sum of gradient values of the grayed left image on each column, and determining whether the sum of gradient values of each column is greater than a preset threshold; if it is greater than the preset threshold, using the column as a new left border, and selecting an image from the new left border to a right border of the left image as an effective left image to be stitched; and if it is not greater than the preset threshold, moving left by one column, and continuing to calculate the sum of gradient values of next column; and

sequentially calculating from left to right a sum of gradient values of the grayed right image on each column, and determining whether the sum of gradient values of each column is greater than a preset threshold; if it is greater than the preset threshold, using the column as a new right border, and selecting an image from the new right border to a left border of the right image as an effective right image to be stitched; and if it is not greater than the preset threshold, moving right by one column, and continuing to calculate the sum of gradient values of next column.

10. The image stitching system based on a camera earphone according to claim 9, wherein when the processor executes the computer program, the following steps are further implemented: after the areas that are blocked by human face of the images photographed by the two camera earphones are removed, overlapped areas in the left image and the right image are acquired respectively, the overlapped areas in the left image and the right image serving as the two effective images to be stitched.

11. The image stitching system based on a camera earphone according to claim 9, wherein after the images photographed by the two camera earphones at different angles are acquired, when the processor executes the computer program, the following steps are further implemented:

positioning information transmitted by positioning devices in the two camera earphones is acquired, relative positions of the two camera earphones are calculated according to the positioning information, and a database is searched according to the relative positions of the two camera earphones to determine whether stitching template data corresponding thereto is present, and if so, the images photographed by the two camera earphones are stitched into an initial stitched panoramic image through stitching template data stored in the database, a mask image in the stitching template data is acquired, and the mask image and the initial stitched panoramic image are fused to obtain a stitched panoramic image; and if there is no corresponding stitching template data, the areas that are blocked by human face of the images photographed by the two camera earphones are removed; the stitching template data includes the relative positions of the two camera earphones and stitching parameters required for image stitching at the relative positions, the stitching parameters including removing positions for removing the areas that are blocked by human face of the images photographed by the two camera earphones, the perspective projection matrix for unifying the coordinate systems of the two effective images to be stitched, and the mask image; after the mask image is generated, the relative positions of the two camera earphones, the removing positions for removing the areas that are blocked by human face of the images photographed by the two camera earphones, the perspective projection matrix for unifying the coordinate systems of the two effective images to be stitched, and the mask image are bound as the stitching template data and stored in the database.

12. A computer readable storage medium, storing a computer program that when executed by a processor implements the following steps:

acquiring images photographed by at least two camera earphones at different angles;
removing areas that are blocked by human face of the images photographed by the two camera earphones to obtain two effective images to be stitched;
extracting feature points of the two effective images to be stitched, and registering the feature points of the two effective images to be stitched;
unifying coordinate systems of the two effective images to be stitched according to registered feature points to obtain an initial stitched panoramic image;
finding a stitching seam in the initial stitched panoramic image and generating a mask image; and
fusing the mask image and the initial stitched panoramic image to obtain a stitched panoramic image.

13. The computer readable storage medium according to claim 12, wherein the two camera earphones at different angles comprise a left camera earphone on a side of a left ear of a wearer and a right camera earphone on a side of a right ear of the wearer; and the images photographed by the two camera earphones at different angles comprise a left image photographed by the left camera earphone and a right image photographed by the right camera earphone; in the steps implemented when the computer program is executed by the processor, the step of removing areas that are blocked by human face of the images photographed by the two camera earphones to obtain two effective images to be stitched comprises:

graying the left image and the right image respectively to obtain a grayed left image and a grayed right image;
acquiring gradient values of the grayed left image and grayed right image at each pixel on each row respectively;
sequentially calculating from right to left a sum of gradient values of the grayed left image on each column, and determining whether the sum of gradient values of each column is greater than a preset threshold; if it is greater than the preset threshold, using the column as a new left border, and selecting an image from the new left border to a right border of the left image as an effective left image to be stitched; and if it is not greater than the preset threshold, moving left by one column, and continuing to calculate the sum of gradient values of next column; and
sequentially calculating from left to right a sum of gradient values of the grayed right image on each column, and determining whether the sum of gradient values of each column is greater than a preset threshold; if it is greater than the preset threshold, using the column as a new right border, and selecting an image from the new right border to a left border of the right image as an effective right image to be stitched; and if it is not greater than the preset threshold, moving right by one column, and continuing to calculate the sum of gradient values of next column.

14. The computer readable storage medium according to claim 13, wherein when the computer program is executed by the processor, the following steps are further implemented: after the areas that are blocked by human face of the images photographed by the two camera earphones are removed, overlapped areas in the left image and the right image are acquired respectively, the overlapped areas in the left image and the right image serving as the two effective images to be stitched.

15. The computer readable storage medium according to claim 13, wherein after the images photographed by the two camera earphones at different angles are acquired, when the computer program is executed by the processor, the following steps are further implemented: positioning information transmitted by positioning devices in the two camera earphones is acquired, relative positions of the two camera earphones are calculated according to the positioning information, and a database is searched according to the relative positions of the two camera earphones to determine whether stitching template data corresponding thereto is present, and if so, the images photographed by the two camera earphones are stitched into an initial stitched panoramic image through stitching template data stored in the database, a mask image in the stitching template data is acquired, and the mask image and the initial stitched panoramic image are fused to obtain a stitched panoramic image; and if there is no corresponding stitching template data, the areas that are blocked by human face of the images photographed by the two camera earphones are removed; the stitching template data includes the relative positions of the two camera earphones and stitching parameters required for image stitching at the relative positions, the stitching parameters including removing positions for removing the areas that are blocked by human face of the images photographed by the two camera earphones, the perspective projection matrix for unifying the coordinate systems of the two effective images to be stitched, and the mask image; after the mask image is generated, the relative positions of the two camera earphones, the removing positions for removing the areas that are blocked by human face of the images photographed by the two camera earphones, the perspective projection matrix for unifying the coordinate systems of the two effective images to be stitched, and the mask image are bound as the stitching template data and stored in the database.

Fig. 1

Fig. 2

S1 — acquiring images photographed by at least two camera earphones at different angles

S2 — removing areas that are blocked by the human face of the images photographed by the two camera earphones to obtain two effective images to be stitched

S3 — extracting feature points in the two effective images to be stitched, and registering the feature points of the two effective images to be stitched

S4 — unifying coordinate systems of the two effective images to be stitched according to the registered feature points to obtain an initial stitched panoramic image

S5 — finding a stitching seam in the initial stitched panoramic image and generating a mask image

S6 — fusing the mask image and the initial stitched panoramic image to obtain a stitched panoramic image

Fig. 3

Fig. 4

S21  graying the left image and the right image respectively to obtain a grayed left image and a grayed right image

S22  acquiring gradient values of the grayed left image and grayed right image at each pixel on each row respectively

S23  sequentially calculating from right to left the sum of the gradient values of the grayed left image on each column, and determining whether the sum of the gradient values of each column is greater than a preset threshold; if it is greater than the preset threshold, using the column as a new left border, and selecting the image from the new left border to the right border of the left image as an effective left image to be stitched; and if it is not greater than the preset threshold, moving left by one column, and continuing to calculate the sum of the gradient values of the next column

S24  sequentially calculating from left to right the sum of the gradient values of the grayed left image on each column, and determining whether the sum of the gradient values of each column is greater than a preset threshold; if it is greater than the preset threshold, using the column as a new right border, and selecting the image from the new right border to the left border of the right image as an effective right image to be stitched; and if it is not greater than the preset threshold, moving right by one column, and continuing to calculate the sum of the gradient values of the next column

Fig. 5

Fig. 6

Fig. 7

Europäisches
Patentamt

European
Patent Office

Office européen
des brevets

**EUROPEAN SEARCH REPORT**

Application Number

EP 18 20 4776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 206 585 725 U (LI WENJIE) 24 October 2017 (2017-10-24) * paragraph [0007] * * paragraph [0019] * * paragraph [0038] - paragraph [0052] * & US 2018/270415 A1 (LI WENJIE [CN]) 20 September 2018 (2018-09-20) ----- | 1,2,8,12 | INV. G06T3/40 |
| Y | KR 101 836 238 B1 (INCHEON UNIV INDUSTRY ACADEMIC COOPERATION FOUNDATION [KR]) 9 March 2018 (2018-03-09) * paragraph [0011] - paragraph [0012] * * paragraph [0034] * * paragraph [0048] * * paragraph [0074] * * paragraph [0094] - paragraph [0103] * & Sang Kyun Kim: "KR 101 868 740 B - EPO machine translation" In: "KR 101 868 740 B - EPO machine translation", 18 June 2018 (2018-06-18), XP55575239, pages 1-24, ----- | 1,2,8,12 | |
| A | FOWLKES C C ET AL: "Learning to detect natural image boundaries using local brightness, color, and texture cues", IEEE TRANSACTIONS ON PATTERN ANALYSIS AND MACHINE INTELLIGENCE, IEEE COMPUTER SOCIETY, USA, vol. 26, no. 5, 1 May 2004 (2004-05-01), pages 530-549, XP011109073, * page 530, left-hand column, paragraph 1 - page 531, right-hand column, last paragraph * ----- | 3-7, 9-11, 13-15 | TECHNICAL FIELDS SEARCHED (IPC) G06T |
| A | US 2016/307350 A1 (HUANG XIAODONG [CA]) 20 October 2016 (2016-10-20) * paragraph [0008] - paragraph [0001] * ----- -/-- | 1-15 | |

The present search report has been drawn up for all claims

| Place of search | Date of completion of the search | Examiner |
|---|---|---|
| Munich | 29 March 2019 | Pierfederici, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 18 20 4776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/061006 A1 (LEI HUA [CN] ET AL) 1 March 2018 (2018-03-01) * paragraph [0033] - paragraph [0034] * ----- | 1-15 | |

TECHNICAL FIELDS
SEARCHED    (IPC)

The present search report has been drawn up for all claims

| Place of search | Date of completion of the search | Examiner |
|---|---|---|
| Munich | 29 March 2019 | Pierfederici, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 20 4776

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2019

| Patent document cited in search report | | Publication date | Patent family member(s) | | Publication date |
|---|---|---|---|---|---|
| CN 206585725 | U | 24-10-2017 | NONE | | |
| KR 101836238 | B1 | 09-03-2018 | NONE | | |
| US 2016307350 | A1 | 20-10-2016 | US 2016307350 A1<br>WO 2016165016 A1 | | 20-10-2016<br>20-10-2016 |
| US 2018061006 | A1 | 01-03-2018 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810726198X